# EUROPEAN PATENT APPLICATION

(11) **EP 4 428 191 A1**
(43) Date of publication of application: **11.09.2024**
(21) Application number: 22904123.1
(22) Date of filing: 01.12.2022
(51) Int. Cl.: C08L 23/16, C08K 3/06, C08K 5/39, C08K 5/40, C08K 5/44, F16L 11/04

(54) **RUBBER COMPOSITION FOR VEHICLE COOLANT TRANSPORT HOSE, AND VEHICLE COOLANT TRANSPORT HOSE OBTAINED USING SAME**

(30) Priority: 09.12.2021 JP 2021200355
(71) Applicant: Sumitomo Riko Company Limited, Komaki-shi, Aichi 485-8550 (JP)
(72) Inventor: HIRADO, Motoki, Komaki-shi, Aichi 485-8550 (JP); TSUCHIYA, Taishi, Komaki-shi, Aichi 485-8550 (JP); HIRAI, Ryo, Komaki-shi, Aichi 485-8550 (JP); NODA, Masashi, Komaki-shi, Aichi 485-8550 (JP)
(74) Representative: Becker Kurig & Partner Patentanwälte mbB
(86) International application number: PCT/JP2022/044345
(87) International publication number: WO 2023/106192

(57) **Abstract**

Provided are a rubber composition for a vehicle coolant transport hose and a vehicle coolant transport hose obtained using the same that make it possible to solve various problems associated with increased coolant conductivity and clogging of filters of a vehicle coolant system, these problems having been observed in the past when a sulfur-vulcanized ethylene-propylene copolymer rubber composition was employed as a hose material. A sulfur-vulcanized rubber composition that contains an ethylene-propylene copolymer rubber (A) as the main component and a vulcanization accelerator (B) and that serves as the material of the innermost layer of a vehicle coolant transport hose, wherein the vulcanization accelerator (B) includes at least one vulcanization accelerator selected from the group consisting of (B-1) to (B-3) below in a specific proportion. (B-1) A dithiocarbamate vulcanization accelerator having a molecular weight of 380 or greater. (B-2) A thiuram vulcanization accelerator having a molecular weight of 380 or greater. (B-3) A sulfenamide vulcanization accelerator.

## Description

### Technical Field

The disclosure relates to a rubber composition for a vehicle coolant transport hose and a vehicle coolant transport hose obtained using the same. Specifically, the disclosure relates to an improvement technology for vehicle coolant transport hoses used in connection between an engine and a radiator, a connection between an engine and a heater core, a fuel cell system, etc., in various vehicles such as automobiles.

### Background Art

Ethylene-propylene copolymer rubber, which is excellent in water resistance, is generally used as a forming material for vehicle hoses through which coolant mixed with antifreeze (LLC) flows (vehicle coolant transport hoses). In addition to the ethylene-propylene copolymer rubber, the forming material usually contains fillers such as carbon black, softening agents such as process oil, vulcanizing agents, vulcanization accelerators, and the like, and a desired coolant transport hose is formed using the rubber composition obtained by kneading the foregoing.

When the ethylene-propylene copolymer rubber as described above is used as the main material, there are two types of vulcanization modes, which are "sulfur vulcanization" and "peroxide vulcanization" (e.g., see Patent Documents 1 and 2, etc.).

### [Prior Art Document(s)]

### [Patent Document(s)]

Patent Document 1: International Publication No. 2019/107415.
Patent Document 2: Japanese Patent Application Laid-Open (JP-A) No. H06-262728

### SUMMARY

### Issues to be solved by the disclosure

As for the hose material, for example, it is common to adopt the specification of "sulfur vulcanization", which is advantageous in terms of cost, etc., as described in Patent Document 1. However, in a hose using a sulfur-vulcanized ethylene-propylene copolymer rubber composition, the rubber contains unreacted excess residues of the vulcanization accelerator used in sulfur vulcanization and decomposition products of the vulcanization accelerator.

In a conventional vehicle coolant transport hose that uses a sulfur-vulcanized ethylene-propylene copolymer rubber composition, due to contact with the coolant flowing inside the hose, it can be seen that the components as described above (unreacted excess residues of the vulcanization accelerator and decomposition products of the vulcanization accelerator) tend to be extracted (eluted) into the coolant. When such a phenomenon occurs, some of the extracted components react with the compounds in the coolant to generate new compounds, which may result in adverse effects such as clogging of filters in the vehicle cooling system to which the hose is connected.

In addition, there is concern that the extracted components may increase the conductivity of the coolant, which may cause various issues (deterioration of the hose, spark ignition, etc.).

Furthermore, in recent years, a power generation method using a fuel cell system (especially a solid polymer fuel cell) has been viewed as a promising next-generation power generation method for various vehicles such as automobiles. It is said that the performance of the power generation site in this fuel cell system is significantly degraded by foreign mixed substances such as sulfur or metal ions. Thus, among hoses or piping members such as the coolant transport hose used in such fuel cell systems, clean ones exhibiting low extractability (the property of being difficult to extract by the coolant, such as water flowing through the hose) are required.

On the other hand, the hose described in Patent Document 2 is a hose using a peroxide-vulcanized ethylene-propylene copolymer rubber composition, which does not cause the above-mentioned issues due to the extracted components, but is disadvantageous in terms of cost and easily causes insufficient vulcanization, and there are many other issues to be addressed.

The disclosure is made in view of the above circumstances and provides a rubber composition for a vehicle coolant transport hose and a vehicle coolant transport hose obtained using the same, which may solve various issues, such as clogging of the filter of a vehicle cooling system and issues associated with the increased coolant conductivity, which are conventionally observed when a sulfur-vulcanized ethylene-propylene copolymer rubber composition is used as a material for a vehicle coolant transport hose.

### Means for solving the issues

The inventors have conducted extensive research on the rubber composition for vehicle coolant transport hoses to address the above issue. In the course of the research, the inventors paid attention to vulcanization accelerators used in the sulfur-vulcanized ethylene-propylene copolymer rubber composition. Many of the vulcanization accelerators conventionally used in the sulfur-vulcanized ethylene-propylene copolymer rubber compositions have low molecular weights, and the unreacted excess residues and decomposition products thereof tend to be extracted (eluted) into the coolant as mentioned above. The inventors conducted various experiments and found that when a specific vulcanization accelerator was used as the vulcanization accelerator (at least one vulcanization accelerator selected from the group consisting of a dithiocarbamate vulcanization accelerator having a molecular weight of 380 or more (B-1), a thiuram vulcanization accelerator having a molecular weight of 380 or more (B-2), and a sulfenamide vulcanization accelerator (B-3)) in a specific proportion, extraction (elution) into the coolant as described above was suppressed without impairing the properties and functions required for the vehicle coolant transport hose, and issues such as clogging of the filters of the vehicle cooling systems and increased coolant conductivity could be eliminated.

However, the gist of the disclosure is [1] to [5] as follows.
[1] A sulfur-vulcanized rubber composition for a vehicle coolant transport hose, containing an ethylene-propylene copolymer rubber (A) as a main component and a vulcanization accelerator (B). The vulcanization accelerator (B) contains at least one selected from a group consisting of (B-1) to (B-3) below,
   a total amount of (B-1) to (B-3) is 3.25 parts by mass or less per 100 parts by mass of the ethylene-propylene copolymer rubber (A), and
   a total amount of (B-1) to (B-3) is 75% by mass or more of the vulcanization accelerator (B) as a whole.
   (B-1) is a dithiocarbamate vulcanization accelerator having a molecular weight of 380 or more,
   (B-2) is a thiuram vulcanization accelerator having a molecular weight of 380 or more, and
   (B-3) a sulfenamide vulcanization accelerator.
[2] The rubber composition for the vehicle coolant transport hose described in [1], where (B-1) is a dithiocarbamate vulcanization accelerator having a molecular weight of 400 or more.
[3] The rubber composition for the vehicle coolant transport hose described in [1] or [2], where (B-2) is a thiuram vulcanization accelerator having a molecular weight of 400 or more.
[4] The rubber composition for the coolant transport hose for the vehicle described in [2] or [3], where the vulcanization accelerator (B) contains at least a vulcanization accelerator selected from a group consisting of (B-1) and (B-2), and the total amount of (B-1) and (B-2) is 75% by mass or more of the vulcanization accelerator (B) as a whole.
[5] A vehicle coolant transport hose, including at least one constituent layer in which an innermost layer includes a vulcanizate of the rubber composition for the vehicle coolant transport hose described in any one of [1] to [4].

### Effects of the Invention

In the disclosure, the rubber composition for a vehicle coolant transport hose is a sulfur-vulcanized rubber composition, which is advantageous in terms of cost, etc., and the rubber composition contains a specific vulcanization accelerator in a specific proportion. Thus, it is possible to suppress the extraction of unreacted excess residues and decomposition products of the vulcanization accelerator into the coolant, and solving clogging of the filter of the vehicle cooling system and various issues associated with the increased coolant conductivity caused by these extracts (extracted components).

### BRIEF DESCRIPTION OF THE DRAWINGS

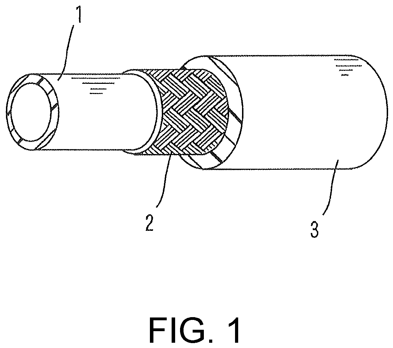

[FIG. 1] is a configuration diagram showing an example of a vehicle coolant transport hose according to the disclosure.

### DESCRIPTION OF THE EMBODIMENTS

In the following, the embodiments of the disclosure will be described in detail. However, the disclosure is not limited to such embodiments.

It is noted that, in this specification, "X and/or Y (X, Y are arbitrary configurations)" means at least one of X and Y, and can mean X only, Y only, or X and Y, in three ways.

A rubber composition for a vehicle coolant transport hose (hereinafter referred to as "the rubber composition") in one embodiment of the disclosure is a sulfur-vulcanized rubber composition containing an ethylene-propylene copolymer rubber (A) as a main component and a vulcanization accelerator (B). The vulcanization accelerator (B) contains at least one selected from a group consisting of (B-1) to (B-3) below, a total amount of (B-1) to (B-3) is 3.25 parts by mass or less per 100 parts by mass of the ethylene-propylene copolymer rubber (A), and a total amount of (B-1) to (B-3) is 75% by mass or more of the vulcanization accelerator (B) as a whole. The "main component" here refers to the component that has a significant effect on the properties of the rubber composition, and usually indicates that more than 50% by mass of the rubber composition as a whole (excluding fillers such as carbon black) is ethylene-propylene copolymer rubber (A).
(B-1) is a dithiocarbamate vulcanization accelerator having a molecular weight of 380 or more,
(B-2) is a thiuram vulcanization accelerator having a molecular weight of 380 or more, and
(B-3) a sulfenamide vulcanization accelerator.

Further, a vehicle coolant transport hose (hereinafter referred to as "the hose"), which is one embodiment of the disclosure, is a vehicle coolant transport hose including at least one constituent layer in which an innermost layer includes a vulcanizate of the rubber composition.

As shown in FIG. 1, examples of the hose include a hose having a three-layer structure in which a rubber inner layer 1 made of the vulcanizate of the rubber composition, a reinforcing yarn layer 2, and a rubber outer layer 3 are laminated sequentially and a hose having a single-layer structure in which only a rubber layer made of the vulcanizate of the rubber composition is provided.

The rubber outer layer 3 may be a rubber layer made of a vulcanizate of the rubber composition or a rubber layer made of a vulcanizate of other rubber composition. However, in the case where the rubber outer layer 3 is to be adhesivelessly interlaminated with the rubber inner layer 1 through the mesh of the reinforcing yarn layer 2, the rubber outer layer 3 is preferably a rubber layer made of a vulcanizate of the rubber composition.

Next, each component constituting the rubber composition will be described.

### «Ethylene-Propylene Copolymer Rubber (A)»

Examples of the ethylene-propylene copolymer rubber (A) used in the rubber composition include an ethylene-propylene-diene ternary copolymer rubber (EPDM) and an ethylene-propylene copolymer rubber (EPM), and these materials may be used alone or two or more thereof may be used in combination.

The ethylene-propylene copolymer rubber (A), for example, preferably has an ethylene content of 50 to 70% by mass, more preferably 52 to 58% by mass. The EPDM preferably has a diene content of 3% by mass or more, more preferably 4 to 5.5% by mass.

For example, as the diene component of the EPDM, diene monomers having a carbon number of 5 to 20 are preferably used, specifically, examples include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-vinyl-2-norbornene (VNB), 5-butylidene-2-norbornene, 2-methallyl-5-norbornene, 2-isopropenyl-5-norbornene, etc. These materials may be used alone or two or more thereof may be used in combination.

### «Sulfur Vulcanizing Agent»

Since the rubber composition is sulfur-vulcanized, a sulfur vulcanizing agent is used as the vulcanizing agent.

Examples of the sulfur vulcanizing agent include sulfur such as powdered sulfur, surface-treated sulfur, precipitated sulfur, colloidal sulfur, and insoluble sulfur, and sulfur compounds that can act as sulfur donor such as sulfur chloride, 2-mercaptoimidazoline, dipentamethylenethiuram pentasulfide (excluding those corresponding to the vulcanization accelerators). These materials may be used alone or two or more thereof may be used in combination.

From the viewpoint of vulcanizability, the content of the sulfur vulcanizing agent is preferably in the range of 0.1 to 3.0 parts by mass per 100 parts by mass of the ethylene-propylene copolymer rubber (A), more preferably in the range of 0.3 to 1.2 parts by mass. In other words, in the case where the amount of sulfur vulcanizing agent is too small, vulcanization is insufficient, and hose strength becomes inferior. On the other hand, in the case where the amount of sulfur vulcanizing agent is too much, the hose tends to become too hard and less flexible, and the scorch time tends to shorten, resulting in poor processability.

### <<Vulcanization Accelerator (B)>>

The vulcanization accelerator (B) indicates all vulcanization accelerators used in the rubber composition, and as described above, the vulcanization accelerator (B) contains at least one selected from a group consisting of (B-1) to (B-3) below. Then, the vulcanization accelerator (B) is added in such a proportion that the total amount of (B-1) to (B-3) is 3.25 parts by mass or less per 100 parts by mass of the ethylene-propylene copolymer rubber (A), and in such a proportion that the total amount of (B-1) to (B-3) is 75% by mass or more of the vulcanization accelerator (B) as a whole.
(B-1) is a dithiocarbamate vulcanization accelerator having a molecular weight of 380 or more,
(B-2) is a thiuram vulcanization accelerator having a molecular weight of 380 or more, and
(B-3) a sulfenamide vulcanization accelerator.

By containing specific vulcanization accelerators in specific proportions as described above, the rubber composition is possible to suppress the extraction of unreacted excess residues and decomposition products of the vulcanization accelerator into the coolant, and solving clogging of the filter of the vehicle cooling system and various issues associated with increased coolant conductivity caused by these extracts (extracted components).

From the viewpoint of favorably obtaining the action and effect of the present disclosure as described above, the total amount of (B-1) to (B-3) in the rubber composition is preferably in the range of 2.0 to 3.25 parts by mass per 100 parts by mass of the ethylene-propylene copolymer rubber (A).

In addition, from the viewpoint of favorably obtaining the action and effect of the present disclosure as described above, the total amount of (B-1) to (B-3) in the rubber composition is preferably 80% by mass or more, and especially preferably 100% by mass (where the vulcanization accelerator (B) includes only (B-1), (B-2), and/or (B-3)) of the vulcanization accelerator (B) as a whole.

Here, from the viewpoint of favorably obtaining the action and effect of the present disclosure as described above, the molecular weight of (B-1) is preferably 400 or more. The molecular weight of (B-1) is usually 1000 or less, preferably 670 or less.

Examples of those corresponding to the dithiocarbamate vulcanization accelerators of (B-1) include zinc dibutyldithiocarbamate, zinc N-pentamethylene dithiocarbamate, zinc dibenzyldithiocarbamate, zinc N-ethyl-N-phenyldithiocarbamate, etc. These materials may be used alone or two or more thereof may be used in combination.

Further, from the viewpoint of favorably obtaining the action and effect of the present disclosure as described above, the molecular weight of (B-2) is preferably 400 or more. The molecular weight of (B-2) is usually 1000 or less, preferably 700 or less.

Examples of those corresponding to the thiuram vulcanization accelerator of (B-2) include tetrabutylthiuram disulfide, tetrakis(2-ethylhexyl)thiuram disulfide, dipentamethylenethiuram tetrasulfide, N,N,N',N'-tetrabenzylthiuram disulfide, etc. These materials may be used alone or two or more thereof may be used in combination. Particularly, tetrakis(2-ethylhexyl)thiuram disulfide and dipentamethylenethiuram tetrasulfide are preferred.

Furthermore, from the viewpoint of favorably obtaining the action and effect of the present disclosure as described above, the vulcanization accelerator (B) contains at least a vulcanization accelerator selected from a group consisting of (B-1) and (B-2), where the molecular weight of (B-1) and/or (B-2) is preferably 400 or more, and the total amount of (B-1) and (B-2) is preferably 75% by mass or more of the vulcanization accelerator (B) as a whole.

Then, from the viewpoint described above, the total amount of (B-1) and (B-2) in the rubber composition is preferably 80% by mass or more, and especially preferably 100% by mass (where the vulcanization accelerator (B) includes only (B-1) and/or (B-2)) of the vulcanization accelerator (B) as a whole.

Examples of those corresponding to the sulfenamide vulcanization accelerator of (B-3) include N-cyclohexyl-2-benzothiazolylsulfenamide, N-oxydiethylene-2-benzothiazolylsulfenamide, N-t-butyl-2-benzothiazoylsulfenamide, N,N'-dicyclohexyl-2-benzothiazoylsulfenamide, etc. These materials may be used alone or two or more thereof may be used in combination. Particularly, N-cyclohexyl-2-benzothiazolylsulfenamide is preferred.

It is noted that even a vulcanization accelerator that does not correspond to the above (B-1) to (B-3) may be used in a small amount as the vulcanization accelerator (B).

Examples of such vulcanization accelerators include dithiocarbamate vulcanization accelerators having a molecular weight of less than 380 (zinc dimethyldithiocarbamate, zinc diethyldithiocarbamate, etc.), thiuram vulcanization accelerators having a molecular weight of less than 380 (tetramethylthiuram disulfide, tetraethylthiuram disulfide, tetramethylthiuram monosulfide, etc.), thiazole vulcanization accelerators (di-2-benzothiazolyl disulfide, dibenzothiazyl disulfide, 2-mercaptobenzothiazole, 2-mercaptobenzothiazole sodium salt, 2-mercaptobenzothiazole zinc salt, etc.), aldehyde ammonia vulcanization accelerators, aldehyde amine vulcanization accelerators, guanidine vulcanization accelerators, thiourea vulcanization accelerators, etc. However, it is desirable that the thiuram vulcanization accelerators having a molecular weight of less than 380 (tetramethylthiuram disulfide, tetraethylthiuram disulfide, etc.) not be used (not included) in the disclosure due to a high possibility of interfering with the solution of the issues of the disclosure. For the same reason, in the disclosure, it is desirable that the thiazole vulcanization accelerators also not be used (not included) or that the content be suppressed to less than 20% by mass of the vulcanization accelerator (B) as a whole.

In addition to the ethylene-propylene copolymer rubber (A), the sulfur vulcanizing agent, and the specific vulcanization accelerator (B), the rubber composition may be blended with acid acceptors, adsorbents, pH adjusters, fillers, vulcanization aids, process oils, anti-aging agents, etc., as necessary.

### <<Acid Acceptor>>

Examples of the acid acceptor include magnesium oxide, calcium hydroxide, hydrotalcite, etc. These materials may be used alone or two or more thereof may be used in combination.

### <<Adsorbent>>

Examples of the adsorbent include Lionite SF manufactured by Lion Corporation.

### <<pH adjuster>>

Examples of the pH adjuster include diethylene glycol, polyethylene glycol, alum, etc. These materials may be used alone or two or more thereof may be used in combination.

### <<Filler>>

Examples of the filler include carbon black, calcium carbonate, talc, etc. These materials may be used alone or two or more thereof may be used in combination. Particularly, carbon black is preferred due to the ability to effectively increase mechanical strength, such as tensile strength.

The content of the filler is preferably in the range of 5 to 350 parts by mass, more preferably in the range of 80 to 250 parts by mass per 100 parts by mass of the ethylene-propylene copolymer rubber (A).

### <<Vulcanizing aid>>

Examples of the vulcanizing aid include zinc white (zinc oxide), stearic acid, etc. These materials may be used alone or two or more thereof may be used in combination.

The content of the vulcanizing aid is preferably in the range of 1 to 25 parts by mass, more preferably in the range of 3 to 8 parts by mass, per 100 parts by mass of the ethylene-propylene copolymer rubber (A).

### <<Process oil>>

Examples of the process oil include naphthenic oils, paraffin oils, aroma oils, etc. These materials may be used alone or two or more thereof may be used in combination. Particularly, naphthenic oils and paraffinic oils are preferred due to their excellent tensile strength and workability.

The content of the process oil is preferably in the range of 5 to 140 parts by mass, more preferably in the range of 30 to 90 parts by mass per 100 parts by mass of the ethylene-propylene copolymer rubber (A).

### <<Anti-aging agent>>

Examples of the anti-aging agent include carbamate-based, phenylenediamine-based, phenol-based, diphenylamine-based, quinoline-based anti-aging agents, waxes, etc. These materials may be used alone or two or more thereof may be used in combination.

The rubber composition can be prepared, for example, by blending the ethylene-propylene copolymer rubber (A) with acid acceptors, adsorbents, pH adjusters, fillers, vulcanization aids, process oils, anti-aging agents, etc., as necessary, and kneading these materials by using kneading machines such as kneaders, Banbury mixers, rolls, etc., and then adding and kneading the sulfur vulcanizing agent and the specific vulcanization accelerator (B).

The hose may be produced, for example, in the following manner using the rubber composition prepared as described above.

That is, first, the rubber composition prepared as described above is extruded into a hose shape to produce an unvulcanized hose. It is also possible to produce an unvulcanized hose by inserting a mandrel into the unvulcanized hose or by extruding the rubber composition on a straight-shaped mandrel.

To produce a single-layer hose, the unvulcanized hose is heated and vulcanized under predetermined conditions (140 to 160 °C for 30 to 60 minutes), and in the case where a mandrel is used, the desired hose may be produced by pulling out the mandrel.

In the case where the layer composition such that a reinforcing yarn layer 2 is provided between the rubber inner layer 1 and the rubber outer layer 3, as in the hose shown in FIG. 1, after producing an unvulcanized hose of the rubber composition as described above, the reinforcing yarn layer 2 is formed by, for example, braiding reinforcing yarn on the outer circumferential surface of the hose with a predetermined number of pulls and number of strokes. After that, as necessary, an adhesive is coated on the above-mentioned reinforcing yarn layer 2 by dipping, spraying, roll coating, brushing, or other methods, the rubber composition for forming the rubber outer layer 3 is extruded on the coated surface (or on the reinforcing yarn layer 2), and a laminate (hose structure) in an unvulcanized state is produced. The laminate (hose structure) in the unvulcanized state so obtained is heated and vulcanized under predetermined conditions (140 to 160 °C for 30 to 60 minutes), and in the case where a mandrel is used, the desired hose may be produced by pulling out the mandrel.

It is noted that by using one with a predetermined bent pipe shape as the mandrel, the hose may also be formed into the desired bent pipe shape.

The hose so obtained may have a single-layer structure or a multi-layer structure in which two or more layers are laminated, but there is no particular limitation, it is preferable that, from the viewpoint of favorably obtaining the action and effect of the present disclosure as described above, at least the innermost layer (in the case of a single-layer structure, that single layer) is made of the rubber composition.

In the hose obtained as described above, the thickness of the innermost layer (in the case of a single-layer structure, that single layer) is preferably 0.25 to 10 mm, more preferably 0.5 to 5 mm. Further, as shown in FIG. 1, in the case where the rubber outer layer 3 is provided, the thickness thereof is preferably 0.25 to 10 mm, more preferably 0.5 to 5 mm. Further, the inner diameter of the hose is preferably 5 to 60 mm, more preferably 10 to 40 mm.

Given the above-mentioned action and effect, the hose may demonstrate excellent performance as, for example, a radiator hose, a heater hose, a coolant transport hose for fuel cell systems, a drain hose, and other vehicle coolant transport hoses.

### Examples

In the following, Examples are described together with Comparative Examples. However, the disclosure is not limited to the Examples.

First, prior to the Examples and the Comparative Examples, a vulcanization accelerator corresponding to any of (i) to (iv) below was prepared.
[(i) Dithiocarbamate vulcanization accelerator (B-1) having a molecular weight of 380 or more]
   SANCELER BZ (zinc dibutyldithiocarbamate, manufactured by Sanshin Chemical Industry Co. Ltd, molecular weight: 474)
   NOCCELER ZP (Zinc N-pentamethylene dithiocarbamate, manufactured by Ouchi Shinko Chemical Industrial Co., Ltd., molecular weight: 386)
[(ii) Thiuram vulcanization accelerator (B-2) having a molecular weight of 380 or more] NOCCELER TOT-N (tetrakis(2-ethylhexyl)thiuram disulfide, manufactured by Ouchi Shinko Chemical Industrial Co., Ltd., molecular weight: 633)
   NOCCELER TRA (dipentamethylenethiuram tetrasulfide, manufactured by Ouchi Shinko Chemical Industrial Co., Ltd., molecular weight: 385)
[(iii) Sulfenamide vulcanization accelerator (B-3)]
   SANCELER CM-G (N-cyclohexyl-2-benzothiazolylsulfenamide, manufactured by Sanshin Chemical Industry Co. Ltd, molecular weight: 264)
[(iv) Vulcanization accelerator other than (B-1) to (B-3)]
   NOCCELER PZ (zinc dimethyldithiocarbamate, manufactured by Ouchi Shinko Chemical Industrial Co., Ltd., molecular weight: 306)
   SANCELER TT (tetramethylthiuram disulfide, manufactured by Sanshin Chemical Industry Co. Ltd, molecular weight: 240)

### [Examples 1 to 11, Comparative Examples 1 to 4)

100 parts by mass of EPDM (manufactured by Sumitomo Chemical Co., Ltd., product name: Esprene 532, ethylene content: 51% by mass, diene content: 3.5% by mass) was blended with 120 parts by mass of SRF grade carbon black (manufactured by Cabot Japan K.K, product name: SPHERON 5200), 68 parts by mass of process oil (manufactured by Idemitsu Kosan Co., Ltd., product name: Diana Process Oil PW-380), 1 part by mass of stearic acid (manufactured by KAO Corporation), and 5 parts by mass of zinc oxide (manufactured by Mitsui Mining & Smelting Co., Ltd.), and was blended with 1.2 parts by mass of sulfur (manufactured by Tsurumi Chemical Industry Co., Ltd., product name: Sulfax T-10) and each of the above vulcanization accelerators in the proportions shown in Table 1 and Table 2 below. The obtained matter was kneaded using a Banbury mixer and an open roll to prepare a rubber composition (rubber composition for vehicle coolant transport hose).

The rubber composition of the Examples and the Comparative Examples so obtained were used, and the respective properties were evaluated according to the following criteria. The results are also shown in Table 1 and Table 2 in the following.

### <Extraction amount>

Each of the obtained rubber compositions was used and press-vulcanized at 160° C for 60 minutes to produce a vulcanized rubber sheet (sample) with a thickness of 2 mm. Subsequently, four 2.8 cm square rubber pieces were punched out from this rubber sheet. These four rubber pieces were sealed together with 100 ml of pure water (conductivity: 1.0 µS/cm) in a 100 ml container made of polypropylene with a lid and heat treated at 90° C for 336 hours to extract the components in the rubber pieces. Then, to observe the change in conductivity due to the components extracted into the pure water, the conductivity of the extracted solution in the container at 25°C was measured using a conductivity meter (manufactured by HORIBA Advanced Techno, Co., Ltd., D-210PC-S).

It may be evaluated that the higher the conductivity, the more unreacted excess residues and decomposition products of the vulcanization accelerator in the sample were extracted. Thus, the evaluation of extraction amount (evaluation of low extractability) was performed according to the following criteria.

### <Criteria>

○ (very good): the measured value of the conductivity is less than 230 µS/cm
× (poor): the measured value of the conductivity is 230 µS/cm or more
[Table 1]

| (parts by mass) | | | | | | | | | | | | |
|---|---|---|---|---|---|---|---|---|---|---|---|---|
| | | Example | | | | | | | | | | |
| | | 1 | 2 | 3 | 4 | 5 | 6 | 7 | 8 | 9 | 10 | 11 |
| i | SANCELER BZ | 0.5 | - | 2 | - | 1 | 1 | - | 0.5 | - | - | - |
| i | NOCCELER ZP | - | - | - | - | - | - | - | - | 1 | 0.75 | 1.25 |
| ii | NOCCELER TOT-N | 1 | 2 | - | - | 1 | - | 1 | - | 0.5 | - | - |
| ii | NOCCELER TRA | - | - | - | - | - | - | - | 1 | - | 0.75 | 1.25 |
| iii | SANCELER CM-G | 0.5 | - | - | 2 | - | 1 | 1 | 0.5 | 0.5 | 0.5 | 0.5 |
| iv | NOCCELER PZ | - | - | - | - | - | - | - | - | - | - | 0.7 |
| iv | SANCELER TT | - | - | - | - | - | - | - | - | - | - | - |
| [( i + ii + iii)/( i + ii + iii + iv)] × 100 (% by mass) | | 100 | 100 | 100 | 100 | 100 | 100 | 100 | 100 | 100 | 100 | 81 |
| [( i + ii )/( i + ii + iii + iv )] × 100 (% by mass) | | 75 | 100 | 100 | 0 | 100 | 50 | 50 | 75 | 75 | 75 | 68 |
| i + ii + iii (parts by mass) | | 2.0 | 2.0 | 2.0 | 2.0 | 2.0 | 2.0 | 2.0 | 2.0 | 2.0 | 2.0 | 3.0 |
| Extraction amount (µS/cm) | | 22 | 19 | 19 | 54 | 17 | 31 | 25 | 53 | 59 | 96 | 213 |
| Evaluation | | ○ | ○ | ○ | ○ | ○ | ○ | ○ | ○ | ○ | ○ | ○ |

**[Table 2]**

| (parts by mass) | | | | | |
|---|---|---|---|---|---|
| | | Comparative Example | | | |
| | | 1 | 2 | 3 | 4 |
| i | SANCELER BZ | - | - | - | - |
| i | NOCCELER ZP | 1.5 | 1.25 | 1.25 | - |
| ii | NOCCELER TOT-N | - | - | - | - |
| ii | NOCCELER TRA | 1.5 | 1.25 | 1.25 | - |
| iii | SANCELER CM-G | 0.5 | 0.5 | 0.5 | 0.5 |
| iv | NOCCELER PZ | 0.7 | 1.3 | - | 1.0 |
| iv | SANCELER TT | - | - | 1.3 | 1.0 |
| {( i + ii + iii)/( i + ii + iii + iv )} × 100 (% by mass) | | 83 | 70 | 70 | 20 |
| {( i + ii )/( i + ii + iii + iv)} × 100 (% by mass) | | 71 | 58 | 58 | 0 |
| i + ii + iii (parts by mass) | | 3.5 | 3.0 | 3.0 | 0.5 |
| Extraction amount (µS/cm) | | 236 | 280 | 304 | 237 |
| Evaluation | | × | × | × | × |

According to the results of Table 1 and Table 2, it may be seen that the type and proportion of the vulcanization accelerator in the rubber composition of the Examples satisfy the specified requirements of the disclosure, and as a result, the extraction amount of the unreacted excess residues and decomposition products of the vulcanization accelerator are suppressed. From this, a vehicle coolant transport hose having an innermost layer made of a vulcanizate of the rubber composition in the Examples is judged to have excellent low extractability, and may solve various issues (hose deterioration, spark ignition, etc.) caused by increased conductivity of the extracted solution.

On the other hand, in the rubber composition of Comparative Example 1, the total amount of the vulcanization accelerators corresponding to (B-1) to (B-3) is too much (the amount of "i+ii+iii" is 3.5 parts by mass per 100 parts by mass of EPDM, which exceeds the 3.25 parts by mass specified in the disclosure), and the result is poor in terms of low extractability. In the rubber compositions of Comparative Examples 2 to 4, although the total amount of the vulcanization accelerators corresponding to (B-1) to (B-3) is suppressed, the proportion of the vulcanization accelerators corresponding to (B -1) to (B -3) to the vulcanization accelerator as a whole (the value of "{(i+ii+iii)/(i+ii+iii+iv)}×100" is less than 75% by mass), and the result is poor in terms of low extractability.

In the above Examples, specific embodiments of the disclosure have been shown, but the above Examples are merely illustrative and should not be construed as limiting. Various modifications apparent to those skilled in the art are intended to be within the scope of the disclosure.

### INDUSTRIAL APPLICABILITY

The rubber composition for a vehicle coolant transport hose of the present disclosure may be used as a rubber composition for a vehicle coolant transport hose such as a radiator hose, a heater hose, a coolant transport hose for fuel cell systems, and a drain hose. The vehicle coolant transport hose is preferably used not only for automobiles but also for other transportation machines (industrial transportation vehicles such as airplanes, forklifts, shovel cars, cranes, and railway vehicles), vending machines, etc.

### REFERENCE SIGNS LIST

1 Rubber inner layer
2 Reinforcing yarn layer
3 Rubber outer layer

## Claims

1. A sulfur-vulcanized rubber composition for a vehicle coolant transport hose, containing an ethylene-propylene copolymer rubber (A) as a main component and a vulcanization accelerator (B), wherein
the vulcanization accelerator (B) contains at least one selected from a group consisting of (B-1) to (B-3) below,
a total amount of (B-1) to (B-3) is 3.25 parts by mass or less per 100 parts by mass of the ethylene-propylene copolymer rubber (A), and
a total amount of (B-1) to (B-3) is 75% by mass or more of the vulcanization accelerator (B) as a whole, wherein:
(B-1) is a dithiocarbamate vulcanization accelerator having a molecular weight of 380 or more,
(B-2) is a thiuram vulcanization accelerator having a molecular weight of 380 or more, and
(B-3) a sulfenamide vulcanization accelerator.

2. The rubber composition for the vehicle coolant transport hose according to claim 1, wherein (B-1) is a dithiocarbamate vulcanization accelerator having a molecular weight of 400 or more.

3. The rubber composition for the vehicle coolant transport hose according to claim 1 or 2, wherein (B-2) is a thiuram vulcanization accelerator having a molecular weight of 400 or more.

4. The rubber composition for the coolant transport hose for the vehicle according to claim 2 or 3, wherein the vulcanization accelerator (B) contains at least a vulcanization accelerator selected from a group consisting of (B-1) and (B-2), and a total amount of (B-1) and (B-2) is 75% by mass or more of the vulcanization accelerator (B) as a whole.

5. A vehicle coolant transport hose, comprising at least one constituent layer in which an innermost layer comprises a vulcanizate of the rubber composition for the vehicle coolant transport hose according to any one of claims 1 to 4.
